(19) Europäisches Patentamt
European Patent Office
Office européen des brevets

(11) EP 4 815 114 A1

(12) **EUROPEAN PATENT APPLICATION**
published in accordance with Art. 153(4) EPC

(43) Date of publication:
**30.09.2026 Bulletin 2026/40**

(21) Application number: **24895926.4**

(22) Date of filing: **19.09.2024**

(51) International Patent Classification (IPC):
***H01M 10/635*** *(2014.01)* ***B60L 58/24*** *(2019.01)*
***F24F 13/30*** *(2006.01)*

(52) Cooperative Patent Classification (CPC):
**B60L 58/24; H01M 10/615; H01M 10/625; H01M 10/63; H01M 10/635;** F24F 2130/30; Y02E 60/10

(86) International application number:
**PCT/CN2024/119737**

(87) International publication number:
**WO 2025/112828 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.11.2023 CN 202311614858**

(71) Applicant: **BYD Company Limited**
**Shenzhen, Guangdong 518118 (CN)**

(72) Inventors:
- **XIANG, Ying**
  **Shenzhen, Guangdong 518118 (CN)**
- **CAI, Yaomin**
  **Shenzhen, Guangdong 518118 (CN)**
- **XIONG, Bojun**
  **Shenzhen, Guangdong 518118 (CN)**
- **WANG, Qiang**
  **Shenzhen, Guangdong 518118 (CN)**
- **PENG, Qingbo**
  **Shenzhen, Guangdong 518118 (CN)**

(74) Representative: **Taor, Simon Edward William et al**
**Venner Shipley LLP**
**TIDE Bankside**
**8 Emerson Street**
**London SE1 9DU (GB)**

(54) **METHOD FOR ADJUSTING OPENING DEGREE OF VALVE AND RELATED APPARATUS USING SAME**

(57) A method for adjusting the opening degree of a valve and a related apparatus using same. The method includes: acquiring the temperature difference of a battery assembly; and, when the temperature difference is greater than or equal to a preset threshold value, on the basis of the area of a first temperature zone of the battery assembly and the area of a second temperature zone thereof, generating a valve opening degree control instruction, so as to control the opening degree of a first valve connected to a first heat exchange member of the first temperature zone and the opening degree of a second valve connected to a second heat exchange member of the second temperature zone.

The temperature difference of the battery assembly is acquired
S301
When the temperature difference of the battery assembly is greater than or equal to the preset threshold, the valve opening degree control instruction is generated according to the area of the first temperature zone and the area of the second temperature zone
S302

FIG. 3

EP 4 815 114 A1

## Description

### CROSS-REFERENCE TO RELATED APPLICATIONS

The present disclosure claims priority to Chinese Patent Application No. 202311614858.2 filed on November 28, 2023, entitled "METHOD FOR ADJUSTING OPENING DEGREE OF VALVE AND RELATED APPARATUS", which is incorporated herein by reference in its entirety.

### FIELD

The present disclosure relates to the field of vehicle power battery temperature control, and particularly relates to a method for adjusting an opening degree of a valve and a related apparatus using the same.

### BACKGROUND

With the rapid development of the new energy automobile industry, the capacity and charging/discharging rate of the power battery are also gradually increasing. The greater the charging/discharging rate is, the more heat the power battery itself generates, and the more significant the non-uniformity of the internal temperature is. In order to ensure the life and performance of the battery, the temperature of the battery needs to be adjusted to reduce the non-uniformity of the internal temperature.

In the existing solution for adjusting the battery temperature, the working medium for adjusting the temperature flows into the inlet of the cooler and flows out of the outlet of the cooler after absorbing the heat of the battery or releasing its own heat.

Since the working medium has the strongest capacity to adjust the battery temperature at the inlet of the cooler, the capacity to adjust the battery temperature gradually weakens in the process from the inlet to the outlet of the cooler. Therefore, the non-uniformity of the internal temperature of the battery cannot be effectively reduced.

### SUMMARY

Embodiments of the present disclosure provide a method for adjusting an opening degree of a valve and a related apparatus using the same. A valve opening degree control instruction is generated according to an area of a first temperature zone and an area of a second temperature zone, the temperature difference of the battery assembly can be reduced and the accuracy of thermal management of the battery assembly can be improved.

In a first aspect, an embodiment of the present disclosure provides a method for adjusting an opening degree of a valve, the method is configured to control the opening degrees of a first valve and a second valve of a battery assembly, wherein the battery assembly has a first temperature zone and a second temperature zone, a first heat exchange member is arranged in the first temperature zone, a second heat exchange member is arranged in the second temperature zone, the first valve is connected to the first heat exchange member to control a flow rate of a working medium flowing into the first heat exchange member, and the second valve is connected to the second heat exchange member to control a flow rate of a working medium flowing into the second heat exchange member, and the method includes:

a temperature difference of the battery assembly is acquired, the temperature difference is a difference between a second temperature and a first temperature in the battery assembly, the first temperature is a temperature value of the first temperature zone of the battery assembly, and the second temperature is a temperature value of the second temperature zone of the battery assembly, and the first temperature is less than the second temperature;
when the temperature difference of the battery assembly is greater than or equal to a preset threshold, a valve opening degree control instruction is generated according to an area of the first temperature zone and an area of the second temperature zone, the valve opening degree control instruction is configured to adjust the opening degrees of the first valve and the second valve, the area of the first temperature zone is an area of a battery assembly surface of the first temperature zone facing the first heat exchange member, and the area of the second temperature zone is an area of a battery assembly surface of the second temperature zone facing the second heat exchange member.

In the method, whether the opening degrees of the plurality of valves need to be controlled is determined according to the temperature difference of the battery assembly. When the temperature difference of the battery assembly is greater than or equal to the preset threshold, the controller generates the valve opening degree control instruction according to the area of the first temperature zone and the area of the second temperature zone, thereby determining the flow rate of the working medium flowing into the heat exchange member. Compared with the single-in and single-out channel in the prior solution, the flow rates of the plurality of independent heat exchange members are controlled, and the

temperatures of different zones of the battery assembly can be quantitatively adjusted according to the actual temperature difference of the battery assembly. Therefore, while the temperature of the battery assembly is adjusted to the target temperature, the temperature difference of different zones of the battery assembly can be effectively reduced, and the non-uniformity of the internal temperature of the battery assembly can be reduced to a certain extent. Meanwhile, the controller controls the opening degrees of the first valve and the second valve only when the temperature difference is greater than or equal to the preset threshold. The step of adjusting the opening degree of the valve is further simplified, and the calculation power is saved. Moreover, the valve opening degree control instruction is generated according to the area of the first temperature zone and the area of the second temperature zone, the accuracy and the relevance of the valve control can be improved, and therefore the temperature uniformity of the battery assembly can be more accurately controlled.

In a possible embodiment of the first aspect, before the valve opening degree control instruction is generated according to the area of the first temperature zone and the area of the second temperature zone when the temperature difference of the battery assembly is greater than or equal to the preset threshold, the method further includes:
a working state of the battery assembly, a target temperature corresponding to the working state, and a preset threshold corresponding to the working state are acquired.

In the method, before the controller generates the valve opening degree control instruction, the controller can first acquire the working state of the battery assembly, the target temperature corresponding to the working state, and the preset threshold corresponding to the working state. Then, the corresponding steps are taken to generate the valve opening degree control instruction according to the working state, which is more in line with the actual situation of the battery assembly.

In a possible embodiment of the first aspect, that the valve opening degree control instruction is generated according to the area of the first temperature zone and the area of the second temperature zone includes:
when the temperature difference of the battery assembly is greater than or equal to the preset threshold and the second temperature is less than the target temperature, the valve opening degree control instruction is generated according to the target temperature, the area of the first temperature zone, and the area of the second temperature zone.

In the method, when the temperature difference of the battery assembly is greater than or equal to the preset threshold and the second temperature is less than the target temperature, it is indicated that the temperature difference of the battery assembly is too large, and the overall temperature of the battery assembly is less than the target temperature. The controller can quantitatively control the opening degrees of the first valve and the second valve according to the area of the first temperature zone and the area of the second temperature zone. Therefore, the acquired result is more accurate and more practical.

In a possible embodiment of the first aspect, that the valve opening degree control instruction is generated according to the area of the first temperature zone and the area of the second temperature zone includes:
when the temperature difference of the battery assembly is greater than or equal to the preset threshold and the first temperature is greater than the target temperature, the valve opening degree control instruction is generated according to the target temperature, the area of the first temperature zone, and the area of the second temperature zone.

In the method, when the temperature difference of the battery assembly is greater than or equal to the preset threshold and the first temperature is greater than the target temperature, it is indicated that the temperature difference of the battery assembly is too large, and the overall temperature of the battery assembly is greater than the target temperature. The controller can quantitatively control the opening degrees of the first valve and the second valve according to the area of the first temperature zone and the area of the second temperature zone. Therefore, the acquired result is more accurate and more practical.

In a possible embodiment of the first aspect, that the valve opening degree control instruction is generated according to the target temperature, the area of the first temperature zone and the area of the second temperature zone includes:

> the target temperature corresponding to the working state of the battery assembly being a heating state and a first threshold are acquired;
> when the temperature difference of the battery assembly is greater than or equal to the first threshold and the second temperature is less than the target temperature corresponding to the heating state, the valve opening degree control instruction is generated according to the target temperature, the area of the first temperature zone, and the area of the second temperature zone.

In the method, when the working state of the battery assembly is the heating state, the temperature difference of the battery assembly is further limited to be greater than or equal to the first threshold, and the step of generating the valve opening degree control instruction is simplified.

In a possible embodiment of the first aspect, that the valve opening degree control instruction is generated according to the target temperature, the area of the first temperature zone and the area of the second temperature zone includes:

the target temperature corresponding to the working state of the battery assembly being a cooling while charging/-discharging state and a second threshold are acquired;

when the temperature difference of the battery assembly is greater than or equal to the second threshold and the first temperature is greater than the target temperature corresponding to the cooling while charging/discharging state, the valve opening degree control instruction is generated according to the target temperature, the area of the first temperature zone, and the area of the second temperature zone.

In the method, when the working state of the battery assembly is the cooling while charging/discharging state, the temperature difference of the battery assembly is further limited to be greater than or equal to the second threshold, and the step of generating the valve opening degree control instruction is simplified.

In a possible embodiment of the first aspect, that the valve opening degree control instruction is generated according to the target temperature, the area of the first temperature zone and the area of the second temperature zone includes:

the target temperature corresponding to the working state of the battery assembly being a heating while charging/-discharging state, a third threshold, and a fourth threshold are acquired, the third threshold is less than the fourth threshold;

when the temperature difference of the battery assembly is greater than or equal to the third threshold, less than or equal to the fourth threshold, and the second temperature is less than the target temperature corresponding to the heating state, the valve opening degree control instruction is generated according to the target temperature, the area of the first temperature zone, and the area of the second temperature zone.

In the method, when the working state of the battery assembly is the heating while charging/discharging state, the temperature difference of the battery assembly is further limited to be greater than or equal to the third threshold and less than or equal to the fourth threshold, and the step of generating the valve opening degree control instruction is simplified.

In a possible embodiment of the first aspect, that the valve opening degree control instruction is generated according to the target temperature, the area of the first temperature zone and the area of the second temperature zone includes:

the opening degree control instruction of the first valve and the opening degree control instruction of the second valve are determined according to a first temperature difference area and a second temperature difference area;

the first temperature difference area is determined according to the first temperature, the target temperature, and the area of the first temperature zone; and the second temperature difference area is determined according to the second temperature, the target temperature, and the area of the second temperature zone.

In the method, the opening degree of the valve is determined according to the first temperature, the second temperature, the area of the first temperature zone, the area of the second temperature zone, and the target temperature. The temperature difference between the actual temperature and the target temperature and the area corresponding to the actual temperature in the battery assembly are considered, the reliability of the result is improved, and the thermal management of the battery assembly is more accurate.

In a possible embodiment of the first aspect, that the opening degree control instruction of the first valve and the opening degree control instruction of the second valve are determined according to the first temperature difference area and the second temperature difference area includes:

the opening degree control instruction of the first valve is determined according to a ratio of the first temperature difference area to a temperature difference area, wherein the temperature difference area is a sum of the first temperature difference area and the second temperature difference area, the first temperature difference area is a product of a first temperature difference and the area of the first temperature zone, the first temperature difference is a difference between an average temperature of the first temperature zone and the target temperature, the second temperature difference area is a product of a second temperature difference and the area of the second temperature zone, and the second temperature difference is a difference between an average temperature of the second temperature zone and the target temperature;

the opening degree control instruction of the second valve is determined according to the opening degree of the first valve.

In the method, the opening degree of the first valve is determined according to the ratio of the first temperature difference area corresponding to the first valve to the total temperature difference area, and the opening degree of the second valve is determined according to the first valve. In this way, the opening degree of any one of the plurality of valves is

first determined, and the opening degrees of the other valves are determined according to the relationship between the valve and the other valves. The opening degree of each of the plurality of valves does not need to be calculated separately, and the working efficiency is improved.

In a possible embodiment of the first aspect, a sum of the opening degree of the first valve and the opening degree of the second valve is 1.

In a possible embodiment of the first aspect, that the valve opening degree control instruction is generated according to the area of the first temperature zone and the area of the second temperature zone includes:

the target temperature corresponding to the working state of the battery assembly being the heating while charging/discharging state, the third threshold, and the fourth threshold are acquired, the third threshold is less than the fourth threshold;
when the temperature difference of the battery assembly is greater than or equal to the fourth threshold, the valve opening degree control instruction is generated according to the area of the first temperature zone and the area of the second temperature zone.

In a possible embodiment of the first aspect, that the valve opening degree control instruction is generated according to the area of the first temperature zone and the area of the second temperature zone includes:

the opening degree control instruction of the first valve is generated according to a ratio of the area of the first temperature zone to a sum of the area of the first temperature zone and the area of the second temperature zone;
the opening degree control instruction of the second valve is determined according to the opening degree control instruction of the first valve.

In the method, when the battery assembly is in the heating while charging/discharging state, the opening degree of the valve of each zone is determined according to the area of the zone. The process of determining the opening degree of the valve is further simplified, the opening degree of the valve is quantitatively determined according to the area corresponding to the zone. It is more in line with the actual temperature and working state of the battery assembly, and the accuracy of the result is improved.

In a possible embodiment of the first aspect, the sum of the opening degree of the first valve and the opening degree of the second valve is 1.

In a possible embodiment of the first aspect, the first temperature is the minimum temperature in the first temperature zone, and/or the second temperature is the maximum temperature in the second temperature zone.

In a possible embodiment of the first aspect, the method further includes:
when the temperature difference of the battery assembly is greater than or equal to the preset threshold and the second temperature is greater than or equal to the target temperature, the second temperature difference is 0.

In a possible embodiment of the first aspect, the method further includes:
when the temperature difference of the battery assembly is greater than or equal to the preset threshold and the first temperature is less than or equal to the target temperature, the first temperature difference is 0.

It can be seen that the first temperature can be the minimum temperature in the first temperature zone, and the second temperature can be the maximum temperature in the second temperature zone. In actual application, the first temperature can not be limited to the minimum temperature, and the second temperature can not be limited to the maximum temperature. As long as there is a temperature difference in the battery assembly, and the temperature difference is greater than or equal to the preset threshold, the valve opening degree control instruction can be determined according to the method.

In a second aspect, the embodiment of the present disclosure provides a controller, the controller includes a processor and a memory, the processor is coupled to the memory, the processor is configured to store a computer program, and the processor is configured to invoke and execute the computer program, to enable the controller to implement the method described in any one of the preceding first aspects.

In a third aspect, the embodiment of the present disclosure provides a computer readable storage medium, the computer readable storage medium stores instructions, and when the instructions are executed by the controller, the controller implements the method described in any one of the preceding first aspects.

In a fourth aspect, the embodiment of the present disclosure provides a heating management system, the heating management system includes a battery assembly, the battery assembly includes a first valve, a second valve, a first heat exchange member and a second heat exchange member, and the heating management system is configured to implement the method described in any one of the preceding first aspects.

In a fifth aspect, the embodiment of the present disclosure provides an electric system, the electric system includes a heating management system, and the electric system is configured to implement the method described in any one of the preceding first aspects.

The technical solutions provided by the second to fifth aspects of the present disclosure have the beneficial effects of the technical solution of the first aspect, which will not be repeated here.

## BRIEF DESCRIPTION OF THE DRAWINGS

The drawings needed in the following embodiment description will be briefly introduced.

FIG. 1 is a schematic diagram of an architecture of a heating management system according to an embodiment of the present disclosure;
FIG. 2 is a logic control schematic diagram of a heating management system according to an embodiment of the present disclosure;
FIG. 3 is a flow schematic diagram of a method for adjusting battery temperature according to an embodiment of the present disclosure;
FIG. 4 is a schematic diagram of acquiring a temperature of a battery assembly according to an embodiment of the present disclosure;
FIG. 5 is a flow schematic diagram of heating according to an embodiment of the present disclosure;
FIG. 6 is a flow schematic diagram of heating while charging/discharging according to an embodiment of the present disclosure;
FIG. 7 is a flow schematic diagram of charging while cooling according to an embodiment of the present disclosure;
FIG. 8 is a structure schematic diagram of a controller according to an embodiment of the present disclosure.

## DETAILED DESCRIPTION

The embodiments of the present disclosure will be described in detail below with reference to the drawings.
The terms "first", "second", "third", "fourth" and the like in the description, claims and drawings of the present disclosure are used for distinguishing different objects and are not used to describe a particular order. Further, terms such as "include", "have" and any other variations thereof, are intended to cover a non-exclusive inclusion. For example, processes, methods, systems, products, or apparatuses that include a list of steps or units are not limited to the listed steps or units, but can optionally further include other steps or units, or can optionally further include other steps or units inherent to such processes, methods, products, or apparatuses.
In order to facilitate understanding of the embodiments of the present disclosure, the technical problems to be solved by the present disclosure are analyzed and proposed as follows.
Current adjustment methods for the battery temperature include heating the battery or cooling the battery. In the method of heating the battery, in addition to heating the battery by hardware such as a heating film, the battery can be heated by using liquid heating, direct heating, or self-heating. In the method of cooling the battery, the battery is usually cooled by using liquid cooling or direct cooling.
Since the heat generation of the battery cells in the battery is non-uniform, and the power distribution components and the expansion beam inside the battery pack also affect the temperature field of the battery, there are one or more obvious second temperature zones and first temperature zones in the battery cells at the pack level, thereby causing inconsistent battery temperatures.
However, the above adjustment methods for the battery temperature cannot effectively solve the problem of inconsistent battery temperatures. For example, when the battery temperature is increased, since the heating power of the heating film is limited, liquid heating or direct heating is usually configured to assist heating. The process of liquid heating or direct heating the battery is that the high-temperature working medium flows into the inlet of the cooler, the cooler transfers the high-temperature working medium to the battery through a single-in and single-out pipeline. The high-temperature working medium flows out of the outlet of the cooler after transferring heat to the battery, thereby increasing the temperature of the battery. Therefore, the heating capacity of the high-temperature working medium is strong at the inlet of the cooler and weak at the outlet of the cooler, and the heating capacity cannot be maintained strong in a plurality of first temperature zones in the battery. Since the heating capacity of the high-temperature working medium in the battery is inconsistent, the battery temperatures are inconsistent. In addition, when the battery is self-heated, since the self-heating is heat generation of the battery itself, the battery temperatures are also inconsistent.
When the battery temperature is reduced, the process of liquid cooling or direct cooling the battery is that the low-temperature working medium flows into the inlet of the cooler, the cooler transfers the low-temperature working medium to the battery through a single-in and single-out pipeline. The low-temperature working medium flows out of the outlet of the cooler after absorbing the heat of the battery, thereby reducing the temperature of the battery. Therefore, the cooling capacity of the low-temperature working medium is strong at the inlet of the cooler and weak at the outlet of the cooler, and the cooling capacity cannot be maintained strong in a plurality of second temperature zones in the battery. Since the cooling capacity of the low-temperature working medium in the battery is inconsistent, the battery temperatures are

inconsistent.

In view of this, the present disclosure provides a method for adjusting an opening degree of a valve. A controller acquires the temperature difference between the first temperature zone and the second temperature zone in the battery assembly in real time. When the temperature difference is greater than or equal to a preset threshold, the controller determines a valve opening degree control instruction according to the area of the first temperature zone and the area of the second temperature zone. Thus, the opening degree of a first valve connected to a first heat exchange member in the first temperature zone can be determined according to the valve opening degree control instruction, and the opening degree of a second valve connected to a second heat exchange member in the second temperature zone can be determined.

The system architecture to which the embodiments of the present disclosure are applied is described below. It should be noted that the system architecture and business scenarios described in the present disclosure are for more clearly illustrating the technical solutions of the present disclosure, and do not constitute a limitation on the technical solutions provided by the present disclosure. It can be learned by a person skilled in the art that, as the system architecture evolves and new business scenarios appear, the technical solutions provided by the present disclosure are also applicable to similar technical problems.

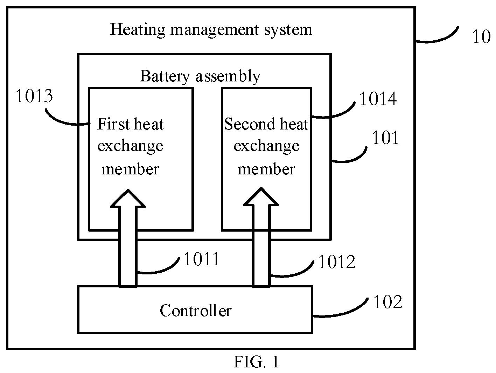

Referring to FIG. 1, FIG. 1 is a schematic diagram of an architecture of a heating management system according to an embodiment of the present disclosure. As shown in FIG. 1, the heating management system 10 includes a battery assembly 101 and a controller 102. The battery assembly 101 includes a first valve 1011, a second valve 1012, a first heat exchange member 1013, and a second heat exchange member 1014.

The battery assembly 101 is divided into a storage battery and a fuel cell. The storage battery is suitable for pure electric vehicles, and includes a lead-acid storage battery, a nickel-hydrogen battery, a sodium-sulfur battery, a secondary lithium battery, an air battery, a ternary lithium battery, and the like. The fuel cell is dedicated to fuel cell electric vehicles, and includes an alkaline fuel cell (AFC), a phosphoric acid fuel cell (PAFC), a molten carbonate fuel cell (MCFC), a solid oxide fuel cell (SOFC), a proton exchange membrane fuel cell (PEMFC), a direct methanol fuel cell (DMFC), and the like. In order to ensure a long service life, good endurance performance, good power performance, and a short charging/discharging time of the battery assembly 101, the temperature of the battery assembly 101 can be adjusted to a target temperature corresponding to a working state, and the temperature difference of the battery assembly 101 can be reduced.

The controller 102 is configured to acquire the temperature difference of the battery assembly 101. When the temperature difference of the battery assembly 101 is greater than or equal to a first threshold, the valve opening degree control instruction is generated according to the area of the first temperature zone and the area of the second temperature zone. The valve opening degree control instruction is configured to adjust the opening degrees of the first valve 1011 and the second valve 1012. The controller 102 controls the flow rate of the working medium flowing into the first heat exchange member 1013 connected to the first valve 1011 by controlling the opening degree of the first valve 1011, and controls the flow rate of the working medium flowing into the second heat exchange member 1014 connected to the second valve 1012 by controlling the opening degree of the second valve 1012.

The first valve 1011 is connected to the first heat exchange member 1013 to control the flow rate of the working medium flowing into the first heat exchange member 1013, wherein the first heat exchange member 1013 is a heat exchange member arranged in the first temperature zone.

The second valve 1012 is connected to the second heat exchange member 1014 to control the flow rate of the working medium flowing into the second heat exchange member 1014, wherein the second heat exchange member 1014 is a heat exchange member arranged in the second temperature zone.

It can be understood that the valve body for controlling the flow rate of the heat exchange member is not necessarily the first valve 1011 and the second valve 1012, and can be two two-way valves for respectively controlling the heat exchange members. A multi-way valve is preferably configured for a plurality of heat exchange members, and a plurality of valve bodies can also be configured to control a plurality of heat exchange members, and the present disclosure does not limit this in any way.

In the embodiment of the present disclosure, the flow rates of the heat exchange medium flowing into the first heat exchange member and the second heat exchange member are respectively controlled, thereby achieving the temperature at different positions of the battery assembly 101, ensuring the uniformity of the temperature at different positions of the battery assembly, and adjusting the temperature more flexibly.

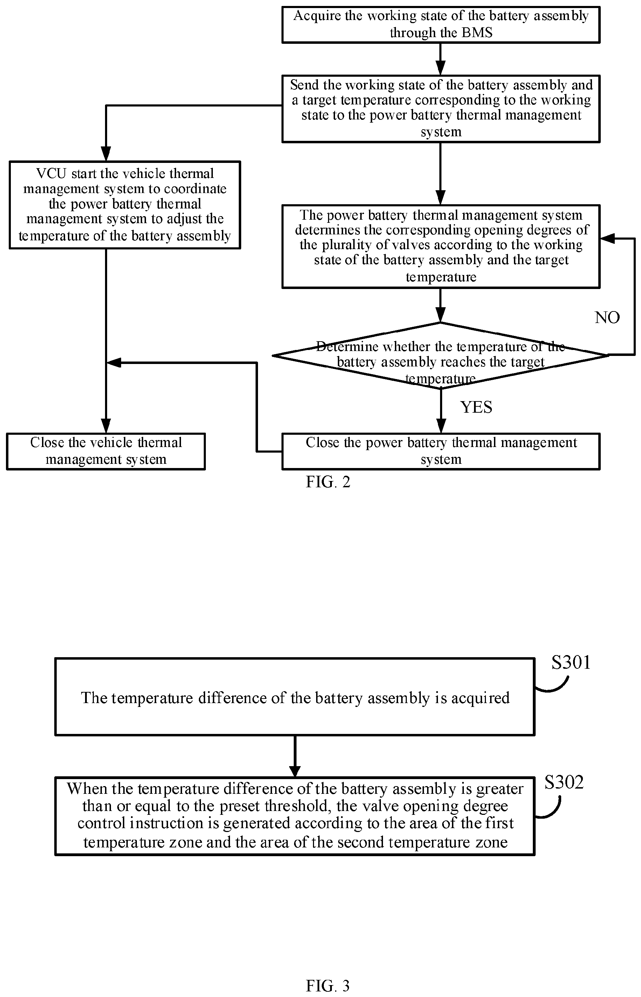

Referring to FIG. 2, FIG. 2 is a logic control schematic diagram of a heating management system according to an embodiment of the present disclosure, which can be applied to the heating management system shown in FIG. 1. As shown in FIG. 2, the heating management system includes a battery management system (BMS), a power battery thermal management system, a vehicle control unit (VCU), and a vehicle thermal management system.

The controller 102 can be one component in the heating management system, for example, the controller 102 is the battery management system, or the vehicle control unit, etc.

The heating management system can control the opening degrees of a plurality of valves through the BMS, and can also directly control the plurality of valves through the VCU, and adjusts the temperature of the battery assembly in

cooperation with the power battery thermal management system and the vehicle thermal management system. Specifically, the process of the heating management system directly controlling the plurality of valves through the VCU and adjusting the temperature of the battery assembly in cooperation with the power battery thermal management system and the vehicle thermal management system is as follows.

The heating management system first acquires the working state of the battery assembly through the BMS, and then sends the working state of the battery assembly and a target temperature corresponding to the working state to the power battery thermal management system through the BMS.

The power battery thermal management system determines the corresponding opening degrees of the plurality of valves according to the working state of the battery assembly and the target temperature. Then, the power battery thermal management system transfers the working medium to the battery assembly through the plurality of heat exchange members corresponding to the plurality of valves according to the corresponding opening degrees of the plurality of valves. The power battery thermal management system determines whether the temperature of the battery assembly reaches the target temperature according to the working state of the battery assembly, and if not, determines the corresponding opening degrees of the plurality of valves again according to the working state of the battery assembly and the target temperature. If the temperature of the battery assembly reaches the target temperature, the heating management system can close the power battery thermal management system.

The VCU can receive the working state of the battery assembly and the target temperature corresponding to the working state from the BMS, and then start the vehicle thermal management system to coordinate the power battery thermal management system to adjust the temperature of the battery assembly.

When the temperature of the battery assembly reaches the target temperature, the heating management system can close the vehicle thermal management system.

Referring to FIG. 3, FIG. 3 is a flow schematic diagram of a method for adjusting the battery temperature according to an embodiment of the present disclosure. The method is applied to the controller shown in FIG. 1. As shown in FIG. 3, the method includes but is not limited to the following steps.

In step S301, the temperature difference of the battery assembly is acquired.

Specifically, the battery assembly has the first temperature zone and the second temperature zone. The first heat exchange member is arranged in the first temperature zone, the second heat exchange member is arranged in the second temperature zone. The first valve is connected to the first heat exchange member to control the flow rate of the working medium flowing into the first heat exchange member, and the second valve is connected to the second heat exchange member to control the flow rate of the working medium flowing into the second heat exchange member. The controller can control the opening degrees of the first valve and the second valve in the battery assembly to control the flow rates of the working medium flowing into the first temperature zone and the second temperature zone. Therefore, before the opening degrees of the first valve and the second valve are determined, the temperature difference of the battery assembly can be acquired first. The temperature difference is the difference between a second temperature and a first temperature in the battery assembly. The first temperature is the temperature value of the first temperature zone of the battery assembly, the second temperature is the temperature value of the second temperature zone of the battery assembly, and the first temperature is less than the second temperature.

In a possible embodiment, the first temperature is the minimum temperature in the first temperature zone and/or the second temperature is the maximum temperature in the second temperature zone.

In a possible embodiment, the first temperature is an arbitrary temperature in the first temperature zone, and the second temperature is the maximum temperature in the second temperature zone.

In a possible embodiment, the first temperature is the minimum temperature in the first temperature zone, and the second temperature is an arbitrary temperature in the second temperature zone.

In a possible embodiment, the first temperature is an arbitrary temperature in the first temperature zone, and the second temperature is an arbitrary temperature in the second temperature zone.

In a possible embodiment, the controller can receive the temperature difference collected by the BMS. The controller collects the temperatures of different zones in the battery assembly through the BMS, determines the temperature difference of the battery assembly through the BMS, and finally acquires the temperature difference from the BMS.

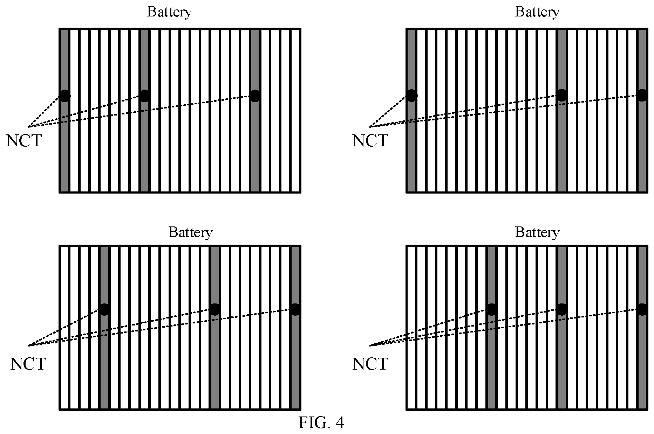

For example, referring to FIG. 4, FIG. 4 is a schematic diagram of acquiring a temperature of a battery assembly according to an embodiment of the present disclosure. As shown in FIG. 4, the controller can acquire the temperatures of different zones in the battery assembly through Negative Temperature Coefficient (NCT). In FIG. 4, the NTCs are arranged in the battery assembly pack at intervals of a certain number of battery cells. The controller can acquire the temperatures of different zones in the battery assembly by acquiring the temperatures of positions where the NTCs are located. For example, the controller can acquire the maximum temperature and the minimum temperature in the battery assembly.

In step S302, when the temperature difference of the battery assembly is greater than or equal to the preset threshold, the valve opening degree control instruction is generated according to the area of the first temperature zone and the area of the second temperature zone.

Specifically, in order to save the computing power of the controller, when the temperature difference of the battery assembly is too large, for example, the temperature difference is greater than or equal to the preset threshold, the controller can generate the valve opening degree control instruction according to the area of the first temperature zone and the area of the second temperature zone. When the temperature difference of the battery assembly is not large, for example, the temperature difference is less than the threshold, the controller directly controls the opening degree of the first valve to be equal to the opening degree of the second valve.

The valve opening degree control instruction is configured to adjust the opening degree of the first valve and the opening degree of the second valve, the area of the first temperature zone is the area of the battery assembly surface of the first temperature zone facing the first heat exchange member, and the area of the second temperature zone is the area of the battery assembly surface of the second temperature zone facing the second heat exchange member.

In the method, whether the opening degrees of the plurality of valves need to be controlled is determined according to the temperature difference of the battery assembly. When the temperature difference is greater than or equal to the preset threshold, the controller generates the valve opening degree control instruction according to the area of the first temperature zone and the area of the second temperature zone. Therefore, the flow rate of the working medium flowing into the heat exchange member is determined. Compared with the single-in and single-out channel in the prior solution, the flow rates of the plurality of independent heat exchange members are controlled, and the temperatures of different zones of the battery assembly can be quantitatively adjusted according to the actual temperature difference of the battery assembly. Therefore, while the temperature of the battery assembly is adjusted to the target temperature, the temperature difference of different zones in the battery assembly can be effectively reduced, and the non-uniformity of the internal temperature of the battery assembly can be reduced to a certain extent. Meanwhile, the controller controls the opening degrees of the first valve and the second valve only when the temperature difference is greater than or equal to the preset threshold. The step of adjusting the valve opening degree is further simplified, and the computing power is saved. Moreover, the valve opening degree control instruction is generated according to the area of the first temperature zone and the area of the second temperature zone, the accuracy and the relevance of the valve control can be improved, and thus the temperature uniformity of the battery assembly can be more accurately controlled. In addition, the method can also achieve real-time monitoring of the temperature difference of the battery assembly, and then the opening degrees of the first valve and the second valve are adjusted in real time, so that the real-time temperature uniformity of the battery assembly is ensured.

In the embodiment of the present disclosure, the controller generates the valve opening degree control instruction, and then sends the valve opening degree control instruction to the corresponding driver to adjust the valve opening degree. In addition, in other embodiments, the controller generates the valve opening degree control instruction and then directly adjusts the valve opening degree according to the valve opening degree control instruction.

In the embodiment of the present disclosure, the method further includes: acquiring the working state of the battery assembly, the target temperature corresponding to the working state, and the preset threshold corresponding to the working state.

In the embodiment of the present disclosure, the working state of the battery assembly is acquired, and then the working mode under different working states is achieved, and then the accuracy of valve control is improved. The working states disclosed by the embodiment of the present disclosure are three kinds of a heating state, a heating while charging/discharging state, and a cooling while charging/discharging state. The charging/discharging mentioned above refer to three states of only charging, only discharging, and charging and discharging simultaneously. The heating state can be a self-heating state of the battery assembly, or can be a heating film heating form.

Specifically, the controller can acquire the working state of the battery assembly in real time, and determine whether the temperature of the battery assembly needs to be adjusted according to the working state of the battery assembly. The working state of the battery assembly includes but is not limited to the temperature of the battery assembly, whether the battery assembly is in the charging state, or whether the battery assembly is in the discharging state, and the like. The vehicle can also acquire the target temperature corresponding to the working state of the battery assembly, for example, the target temperature suitable for the working of the battery assembly, the target temperature suitable for charging the battery assembly, the target temperature suitable for discharging the battery assembly, and the like.

In addition, the step can be arranged before the step of generating the valve opening degree control instruction according to the area of the first temperature zone and the area of the second temperature zone.

In the embodiment of the present disclosure, the area of the first temperature zone and the area of the second temperature zone can be acquired through preliminary thermal management tests of the battery assembly, i.e., different temperature ranges are found through the thermal management tests, and then two temperature zones are formed. Therefore, for the battery assembly, the area of the first temperature zone is often greater than the area of the second temperature zone.

Specifically, in an embodiment of the present disclosure, the battery assembly includes a plurality of cells arranged at intervals along a first direction, the cell is a square cell, the cell has two terminals, and the two terminals are respectively arranged at two ends along an extension direction (i.e., a second direction) of the cell. In this case, the battery

assembly has a plurality of terminals at two ends along the extension direction of the cell, and then a first terminal group is formed. Therefore, the battery assembly has two second temperature zones and one first temperature zone, and the first temperature zone is located between the two second temperature zones. The battery assembly has a first length along the first direction and a second length along the second direction. The area of the second temperature zone is a product of the first length and 20% to 40% of the second length, i.e., the second temperature zone is a zone of the surface of the battery assembly that extends 10% to 20% from the terminal toward the center along the second direction, and the area of the second temperature zone is a projection area of the part on a surface formed by the first direction and the second direction. The area of the first temperature zone is a product of the first length and 60% to 80% of the second length, i.e., the first temperature zone is the portion of the battery assembly except the first temperature zone, and the portion is located between the two second temperature zones.

In another embodiment of the present disclosure, the battery assembly includes a plurality of cells arranged at intervals along a first direction, the cell is square cell, the cell has a plurality of terminals, and the plurality of terminals are located on a same surface of the cell. In this case, the battery assembly has one first temperature zone and one second temperature zone, the second temperature zone is a zone of the surface of the battery assembly that extends 70% to 90% from the terminal along the direction away from the terminal, and the remaining zone is the first temperature zone. In this case, the area of the second temperature zone is parallel to 70% to 90% of the surface area of the terminal, and the area of the first temperature zone is parallel to 10% to 30% of the surface area of the terminal.

In an embodiment of the present disclosure, the first temperature zone and the second temperature zone can be determined according to the performance of the battery assembly. For example, N sensors are arranged on a surface of the battery assembly, the first temperature zone and the second temperature zone are distinguished according to the temperatures detected by the sensors, and the first temperature zone and the second temperature zone have a significant difference. Further, the temperatures detected by the sensors in the same temperature zone have a small difference.

In a possible embodiment, when the temperature difference of the battery assembly is greater than or equal to the preset threshold and the second temperature is less than the target temperature, the valve opening degree control instruction is generated according to the target temperature, the area of the first temperature zone, and the area of the second temperature zone.

Specifically, when the temperature difference of the battery assembly is greater than or equal to the preset threshold, the controller can quantitatively control the flow rates of the working medium flowing into the first heat exchange member and the second heat exchange member by respectively controlling the opening degree of the first valve and the opening degree of the second valve. Therefore, when the second temperature is less than the target temperature, at this time, the first temperature and the second temperature of the battery assembly do not reach the target temperature, and the first temperature zone and the second temperature zone both need the working medium to flow in to adjust the temperature to the target temperature. Therefore, the controller can generate the valve opening degree control instruction according to the target temperature, the area of the first temperature zone, and the area of the second temperature zone.

In a possible embodiment, when the temperature difference of the battery assembly is greater than or equal to the preset threshold and the first temperature is greater than the target temperature, the valve opening degree control instruction is generated according to the target temperature, the area of the first temperature zone, and the area of the second temperature zone.

Specifically, when the temperature difference of the battery assembly is greater than or equal to the preset threshold, the controller can quantitatively control the flow rates of the working medium flowing into the first heat exchange member and the second heat exchange member by respectively controlling the opening degree of the first valve and the opening degree of the second valve. Therefore, when the first temperature is greater than the target temperature, at this time, the first temperature and the second temperature of the battery assembly do not reach the target temperature, and the first temperature zone and the second temperature zone both need the working medium to flow in to adjust the temperature to the target temperature. Therefore, the controller can generate the valve opening degree control instruction according to the target temperature, the area of the first temperature zone, and the area of the second temperature zone.

In a possible embodiment, when the working state of the battery assembly is the heating state, the controller acquires the target temperature corresponding to the working state of the battery assembly being the heating state and a first threshold. When the temperature difference of the battery assembly is greater than or equal to the first threshold and the second temperature is less than the target temperature corresponding to the heating state, the valve opening degree control instruction is generated according to the target temperature, the area of the first temperature zone, and the area of the second temperature zone.

Since the temperatures of different zones of the battery assembly can be collected by NTC, the area of the first temperature zone can be determined according to the battery cells corresponding to the NTCs that collect the first temperature, and the area of the second temperature zone can be determined according to the battery cells corresponding to the NTCs that collect the second temperature. In the heating state, the valve opening degree control instruction is generated when the temperature difference of the battery assembly is greater than or equal to the first threshold and the second temperature is less than the target temperature corresponding to the heating state, so as to improve the accuracy.

In addition, the target temperature in the heating state can be selected as the temperature at which this state is exited, for example, -20°C, -10°C, or the like.

In a possible embodiment, when the working state of the battery assembly is the cooling while charging/discharging state, the controller acquires the target temperature corresponding to the working state of the battery assembly being the cooling while charging/discharging state and a second threshold. When the temperature difference of the battery assembly is greater than or equal to the second threshold and the first temperature is greater than the target temperature corresponding to the cooling while charging/discharging state, the controller generates the valve opening degree control instruction according to the area of the first temperature zone and the area of the second temperature zone.

Specifically, when the working state of the battery assembly is the cooling while charging/discharging state, if the temperature difference of the battery assembly is too large, for example, greater than the second threshold, the controller can reduce the temperature difference by determining the opening degrees of the first valve and the second valve. Further, when the first temperature is greater than the target temperature, i.e., the temperatures of the battery assembly are all greater than the target temperature, the controller can simultaneously cool the first temperature zone and the second temperature zone. The cooling while charging/discharging refers to that the battery assembly is in the charging/discharging state and the heat exchange member is in the state of cooling the battery assembly. In the cooling while charging/discharging state, the valve opening degree control instruction is generated when the temperature difference of the battery assembly is greater than or equal to the second threshold and the first temperature is greater than the target temperature corresponding to the cooling while charging/discharging state, so as to improve the accuracy.

In addition, the target temperature in the cooling while charging/discharging state can be selected as the temperature at which this state is exited, for example, 33°C, 35°C, or the like.

In a possible embodiment, when the working state of the battery assembly is the heating while charging/discharging state, the controller acquires the target temperature corresponding to the working state of the battery assembly being the heating while charging/discharging state, a third threshold, and a fourth threshold. The third threshold is less than the fourth threshold. When the temperature difference of the battery assembly is greater than or equal to the third threshold and less than or equal to the fourth threshold, and the second temperature is less than the target temperature corresponding to the heating state, the valve opening degree control instruction is generated according to the area of the first temperature zone and the area of the second temperature zone.

Specifically, when the working state of the battery assembly is the heating while charging/discharging state, if the temperature difference of the battery assembly is too large, for example, greater than or equal to the third threshold and less than or equal to the fourth threshold, the controller can reduce the temperature difference by determining the opening degrees of the first valve and the second valve. Further, when the second temperature is less than the target temperature corresponding to the heating state, i.e., the temperatures of the battery assembly are all less than the target temperature, the controller can heat the first temperature zone and the second temperature zone simultaneously. The heating while charging/discharging refers to that the battery assembly is in the charging/discharging state and the heat exchange member is in the state of heating the battery assembly. In the heating while charging/discharging state, the valve opening degree control instruction is generated when the temperature difference of the battery assembly is greater than or equal to the third threshold and less than or equal to the fourth threshold, and the second temperature is less than the target temperature corresponding to the heating state, so as to improve the accuracy.

In addition, the target temperature in the heating while charging/discharging state can be selected as the temperature at which to this state is exited, for example, 20°C, 15°C, 10°C, and the like.

In a possible embodiment, the target temperatures corresponding to different states are different, and the target temperatures can be determined according to actual requirements. Generally, the target temperature in the heating state is less than the target temperature in the heating while charging/discharging state, and the target temperature in the heating while charging/discharging state is less than the target temperature in the cooling while charging/discharging state.

In a possible embodiment, that the controller generates the valve opening degree control instruction according to the target temperature, the area of the first temperature zone, and the area of the second temperature zone includes: the controller determining the opening degree control instruction of the first valve and the opening degree control instruction of the second valve according to a first temperature difference area and a second temperature difference area.

The first temperature difference area is determined according to the first temperature, the target temperature, and the area of the first temperature zone. The second temperature difference area is determined according to the second temperature, the target temperature, and the area of the second temperature zone.

In a possible embodiment, the controller determines the opening degree control instruction of the first valve according to a ratio of the first temperature difference area to the temperature difference area. The controller can also determine the opening degree control instruction of the second valve according to the opening degree control instruction of the first valve.

The temperature difference area includes a sum of the first temperature difference area and the second temperature difference area. The first temperature difference area is a product of a first temperature difference and

the area of the second temperature zone. The first temperature difference is a difference between an average temperature of the first temperature zone and the target temperature. The second temperature difference area is a product of a second temperature difference and the area of the second temperature zone. The second temperature difference is a difference between an average temperature of the second temperature zone and the target temperature.

In a possible embodiment, the controller determines the opening degree control instruction of the first valve according to the ratio of the first temperature difference area to the temperature difference area. The controller can also determine the opening degree control instruction of the second valve according to the opening degree control instruction of the first valve.

The temperature difference area includes the sum of the first temperature difference area and the second temperature difference area. The first temperature difference area is the product of the first temperature difference and the area of the second temperature zone. The first temperature difference is a difference between a weighted average temperature of the first temperature zone and the target temperature. The second temperature difference area is a product of the second temperature difference and the area of the second temperature zone. The second temperature difference is a difference between a weighted average temperature of the second temperature zone and the target temperature. The weighted average temperature is an average value acquired after weighting a plurality of temperatures in the first temperature zone. The second temperature zone uses the same method to acquire the weighted average temperature.

In a possible embodiment, the controller determines the opening degree control instruction of the first valve according to the ratio of the first temperature difference area to the temperature difference area. The controller can also determine the opening degree control instruction of the second valve according to the opening degree control instruction of the first valve.

The temperature difference area includes the sum of the first temperature difference area and the second temperature difference area. The first temperature difference area is the product of the first temperature difference and the area of the second temperature zone. The first temperature difference is a difference between a median temperature of the first temperature zone and the target temperature. The second temperature difference area is the product of the second temperature difference and the area of the second temperature zone. The second temperature difference is a difference between a median temperature of the second temperature zone and the target temperature. The median temperature is a temperature value corresponding to a median of a plurality of first temperatures in the first temperature zone. The second temperature zone uses the same method to acquire the median temperature.

In a possible embodiment, the sum of the opening degree of the first valve and the opening degree of the second valve is 1. Therefore, when the opening degree of the first valve is acquired, the controller can determine the opening degree of the second valve according to the opening degree of the first valve.

In a possible embodiment, when the working state of the battery assembly is the cooling while charging/discharging state, the controller acquires the target temperature corresponding to the working state of the battery assembly being the cooling while charging/discharging state and a second threshold. When the temperature difference of the battery assembly is greater than or equal to the second threshold and the first temperature is greater than the target temperature corresponding to the cooling while charging/discharging state, the controller generates the valve opening degree control instruction according to the area of the first temperature zone and the area of the second temperature zone.

Specifically, when the working state of the battery assembly is the cooling while charging/discharging state, if the temperature difference of the battery assembly is too large, for example, greater than the second threshold, the controller can reduce the temperature difference by determining the opening degrees of the first valve and the second valve. Further, when the first temperature is greater than the target temperature, i.e., the temperatures of the battery assembly are all greater than the target temperature, the controller can simultaneously cool the first temperature zone and the second temperature zone.

In a possible embodiment, when the temperature difference of the battery assembly is greater than or equal to the fourth threshold, the controller generates the opening degree control instruction of the first valve according to a ratio of the area of the first temperature zone to a sum of the area of the first temperature zone and the area of the second temperature zone. Then, the opening degree control instruction of the second valve is determined according to the opening degree control instruction of the first valve.

In a possible embodiment, the sum of the opening degree of the first valve and the opening degree of the second valve is 1. Therefore, after determining the opening degree of the first valve, the controller can determine the opening degree of the second valve according to the opening degree of the first valve.

In a possible embodiment, the sum of the opening degree of the first valve and the opening degree of the second valve can be adjusted according to actual requirements. Therefore, after determining the opening degree of the first valve, the controller can determine the opening degree of the second valve according to the opening degree of the first valve. For example, the opening degree of the first valve is proportional to the opening degree of the second valve.

In a possible embodiment, in a process of heating the battery assembly by using the working medium, when the temperature difference of the battery assembly is greater than the first threshold, the opening degree of the first valve is greater than the opening degree of the second valve.

Specifically, when the battery assembly is heated to increase the temperature of the battery assembly, if the temperature difference of the battery assembly is greater than the first threshold, the temperature difference of the battery assembly is too large, which is not conducive to maintaining the service life and performance of the battery assembly. Therefore, the controller can increase the heating power of the first temperature zone of the battery assembly and reduce the heating power of the second temperature zone of the battery assembly. For example, the controller can make the opening degree of the first valve greater than the opening degree of the second valve to increase the heating power of the first temperature zone and reduce the heating power of the second temperature zone.

In a possible embodiment, in a process of cooling the battery assembly by using the working medium, when the temperature difference of the battery assembly is greater than the second threshold, the opening degree of the first valve is less than the opening degree of the second valve.

Specifically, when the battery assembly is cooled to reduce the temperature of the battery assembly, if the temperature difference of the battery assembly is greater than the second threshold, the temperature difference of the battery assembly is too large, which is not conducive to maintaining the service life and performance of the battery assembly. Therefore, the controller can reduce the cooling power of the first temperature zone and increase the cooling power of the second temperature zone. For example, the controller can make the opening degree of the first valve less than the opening degree of the second valve to reduce the cooling power of the first temperature zone and increase the cooling power of the second temperature zone.

In a possible embodiment, when the temperature difference of the battery assembly is greater than or equal to the preset threshold and the second temperature is greater than or equal to the target temperature, the controller determines the opening degree control instruction of the first valve according to the ratio of the first temperature difference area to the temperature difference area. The controller can further determine the opening degree control instruction of the second valve according to the opening degree control instruction of the first valve.

The temperature difference area includes the sum of the first temperature difference area and the second temperature difference area. The first temperature difference area is the product of the first temperature difference and the area of the second temperature zone, and the first temperature difference is the difference between the average temperature of the first temperature zone and the target temperature. The second temperature difference area is the product of the second temperature difference and the area of the second temperature zone, and the second temperature difference is the difference between the average temperature of the second temperature zone and the target temperature.

In this condition, i.e., when the temperature difference of the battery assembly is greater than or equal to the preset threshold and the second temperature is greater than or equal to the target temperature, the second temperature difference is 0. The heat exchange valve of the first heat exchange member corresponding to the first temperature zone is fully opened, i.e., the opening degree of the first valve is 1, thereby improving the heat exchange effect and ensuring the temperature uniformity of the battery assembly.

In a possible embodiment, when the temperature difference of the battery assembly is greater than or equal to the preset threshold and the first temperature is less than or equal to the target temperature, the controller determines the opening degree control instruction of the first valve according to the ratio of the first temperature difference area to the temperature difference area. The controller can further determine the opening degree control instruction of the second valve according to the opening degree control instruction of the first valve.

The temperature difference area includes the sum of the first temperature difference area and the second temperature difference area. The first temperature difference area is the product of the first temperature difference and the area of the second temperature zone, and the first temperature difference is the difference between the average temperature of the first temperature zone and the target temperature. The second temperature difference area is the product of the second temperature difference and the area of the second temperature zone, and the second temperature difference is the difference between the average temperature of the second temperature zone and the target temperature.

In this condition, i.e., when the temperature difference of the battery assembly is greater than or equal to the preset threshold and the first temperature is less than or equal to the target temperature, the first temperature difference is 0. The heat exchange valve of the first heat exchange member corresponding to the second temperature zone is fully opened, i.e., the opening degree of the first valve is 1, thereby improving the heat exchange effect and ensuring the temperature uniformity of the battery assembly.

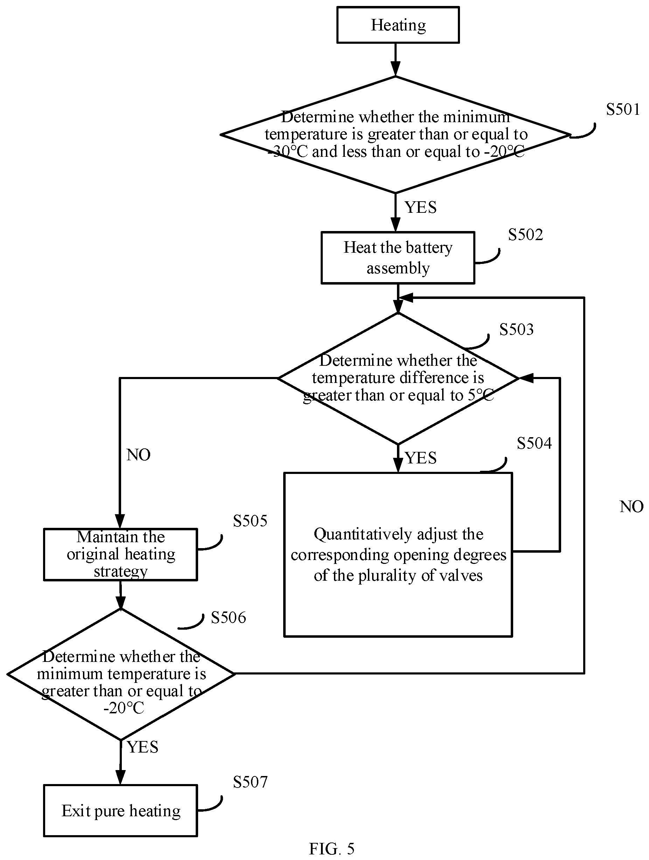

Referring to FIG. 5, FIG. 5 is a flow schematic diagram of heating according to an embodiment of the present disclosure. As shown in FIG. 5, the controller acquires the average temperature of the second temperature zone of the battery assembly as $T_H$, and the ratio of the area of the second temperature zone to the total area of the battery assembly as $S_H$. The average temperature of the first temperature zone is $T_L$, and the ratio of the area of the first temperature zone to the total area of the battery assembly is $S_L$. The opening degree of the first valve and the opening degree of the second valve are 1, the opening degree of the first valve is $K_1$, and the opening degree of the second valve is $1\text{-}K_1$. The target temperature $T_0$ for the pure heating of the battery assembly by the controller is -20°C. The average temperature of the second temperature zone of the battery assembly can be determined according to the average value of the plurality of temperatures collected by the plurality of NTCs in the second temperature zone of the battery assembly, and the average

temperature of the first temperature zone of the battery assembly can be determined according to the average value of the plurality of temperatures collected by the plurality of NTCs in the first temperature zone of the battery assembly. The area of the second temperature zone can be determined according to the area of the battery cell corresponding to the NTC in the second temperature zone of the battery assembly, and the area of the first temperature zone can be determined according to the area of the battery cell corresponding to the NTC in the first temperature zone of the battery assembly.

S501, determine whether the minimum temperature is greater than or equal to -30°C and less than or equal to -20°C. If the minimum temperature is within this range, proceed to S502 to heat the battery assembly.

S502, heat the battery assembly. When the first temperature is within the first preset range and the temperature difference is less than the first threshold, generate the opening degree control instruction of the first valve and the opening degree control instruction of the second valve. The opening degree control instruction of the first valve and the opening degree control instruction of the second valve are configured to adjust the opening degree of the first valve to be equal to the opening degree of the second valve. For example, the opening degree of the first valve is 50%, and the opening degree of the second valve is 50%.

S503, determine whether the temperature difference is greater than or equal to 5°C. The first threshold can be 5°C. For example, the controller can determine according to the difference between the maximum temperature and the minimum temperature of the battery assembly, or according to the difference between any temperature in the first temperature zone and any temperature in the second temperature zone of the battery assembly. If the temperature difference is greater than or equal to 5°C, proceed to S504. If the temperature difference is less than 5°C, proceed to S505.

S504, quantitatively adjust the corresponding opening degrees of the plurality of valves. For example, when the temperature difference is greater than or equal to 5°C, the controller can quantitatively reduce the opening degree of the second valve to reduce the heating power of the second temperature zone, and the opening degree of the second valve ranges from 0 to 50%. The controller can quantitatively increase the opening degree of the first valve to increase the heating power of the first temperature zone, and the opening degree of the first valve ranges from 50 to 100%.

In an embodiment, the controller can determine the opening degree of the first valve and the opening degree of the second valve according to the average temperature of the second temperature zone, the ratio of the area of the second temperature zone to the total area of the battery assembly, the average temperature of the first temperature zone, the ratio of the area of the first temperature zone to the total area of the battery assembly, and the target temperature. Specifically, the controller can determine the opening degree of the first valve according to the following formula:

$$K_1 = \begin{cases} \dfrac{(T_0 - T_L) \cdot S_L}{(T_0 - T_H) \cdot S_H + (T_0 - T_L) \cdot S_L}, & T_{max} < T_0 \\ 1, & T_{max} \geq T_0 \end{cases}$$

wherein $K_1$ is the opening degree of the first valve, the average temperature $T_H$ of the second temperature zone can be any value in the range of -25°C to -10°C, the average temperature $T_L$ of the first temperature zone can be any value in the range of -30°C to -20°C, and $T_H$ is greater than $T_L$, and the target temperature $T_0$ is -20°C.

When the maximum temperature $T_{max}$ of the battery assembly is less than the target temperature, the controller can quantitatively determine the opening degree of the first valve and the opening degree of the second valve according to the above formula.

For example, if the ratio of the area of the first temperature zone to the total area of the battery assembly is any value in the range of 10% to 90%, the opening degree of the first valve acquired according to the above formula corresponds to 0.19 to 1. Correspondingly, the controller can determine the opening degree of the second valve to be 0 to 0.81 according to the opening degree of the first valve.

For another example, if the ratio of the area of the first temperature zone to the total area of the battery assembly and the ratio of the area of the second temperature zone to the total area of the battery assembly are both 50%. Then, the opening degree of the first valve acquired according to the above formula corresponds to 0.67 to 1. Correspondingly, the controller can determine the opening degree of the second valve to be 0 to 0.23 according to the opening degree of the first valve.

When the temperature difference of the battery assembly is greater than or equal to the preset threshold and the second temperature is greater than or equal to the target temperature, the first temperature difference is 1. For example, when the maximum temperature $T_{max}$ of the battery assembly is greater than or equal to the target temperature, the opening degree of the first valve is 1 and the opening degree of the second valve is 0. At this time, the controller can increase the temperature of the first temperature zone to the target temperature.

In addition, after the high-temperature working medium is transferred to the battery assembly through the heat exchange member corresponding to the first temperature zone and the heat exchange member corresponding to the second temperature zone according to the determined opening degrees of the first valve and the second valve, the controller can again acquire the temperature difference of the battery assembly. For example, the controller returns to

S503, and if the temperature difference of the battery assembly is still greater than or equal to 5°C, the controller can quantitatively adjust the corresponding opening degrees of the plurality of valves according to the above formula again until the temperature difference of the battery assembly is less than 5°C.

S505, maintain the original heating strategy. When the temperature difference of the battery assembly is less than 5°C, the controller can maintain the original heating strategy to continue increasing the temperature of the battery assembly.

S506, determine whether the minimum temperature is greater than or equal to -20°C. If the minimum temperature of the battery assembly is greater than or equal to -20°C, proceed to S507. If the minimum temperature of the battery assembly is less than -20°C, return to S503 to continue heating the battery assembly.

S507, exit pure heating. When the minimum temperature of the battery assembly is greater than or equal to the target temperature, the temperature of the battery assembly has been increased to the target temperature, and the controller can end pure heating of the battery assembly.

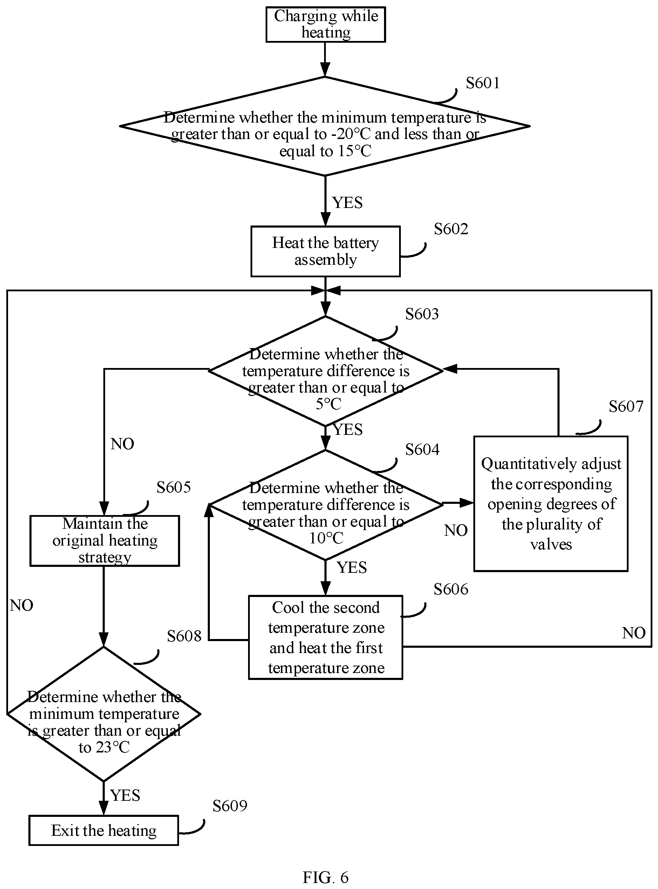

Referring to FIG. 6, FIG. 6 is a flow schematic diagram of heating while charging/discharging according to an embodiment of the present disclosure. As shown in FIG. 6, the opening degree of the first valve is $K_1$, and the opening degree of the second valve is $1-K_1$.

S601, determine whether the minimum temperature is greater than or equal to -20°C and less than or equal to 15°C. If the minimum temperature is within this range, proceed to S602 to heat the battery assembly.

S602, heat the battery assembly. When the first temperature is within the first preset range and the temperature difference is less than the third threshold, generate the opening degree control instruction of the first valve and the opening degree control instruction of the second valve. The opening degree control instruction of the first valve and the opening degree control instruction of the second valve are configured to adjust the opening degree of the first valve to be equal to the opening degree of the second valve. For example, the opening degree of the first valve is 50%, and the opening degree of the second valve is 50%.

S603, determine whether the temperature difference is greater than or equal to 5°C. The third threshold can be 5°C. For example, the controller can determine according to the difference between the maximum temperature and the minimum temperature of the battery assembly, or determine according to the difference between any temperature in the first temperature zone and any temperature in the second temperature zone. If the temperature difference is greater than or equal to 5°C, proceed to S604. If the temperature difference is less than 5°C, proceed to S605.

S604, determine whether the temperature difference is greater than or equal to 10°C. The fourth threshold can be 10°C. For example, the controller can determine according to the difference between the maximum temperature and the minimum temperature of the battery assembly. If the temperature difference is greater than or equal to 10°C, proceed to S606. If the temperature difference is greater than or equal to 5°C and less than 10°C, proceed to S607.

S605, maintain the original heating strategy. When the temperature difference of the battery assembly is less than 5°C, the controller can maintain the original heating strategy to continue increasing the temperature of the battery assembly.

S606, cool the second temperature zone and heat the first temperature zone. For example, when the temperature difference of the battery assembly is greater than or equal to 10°C, the temperature difference of the battery assembly is too large, which is not conducive to charging/discharging of the battery assembly. The controller can reduce the opening degree of the second valve to 0 and then start cooling, and the opening degree of the second valve ranges from 0 to 50%. The controller can quantitatively increase the opening degree of the first valve, and the opening degree of the first valve ranges from 50 to 100%, so as to reduce the temperature difference of the battery assembly to the greatest extent.

In a possible embodiment, the controller can determine the opening degree of the second valve according to the ratio of the area of the second temperature zone to the total area of the battery assembly, and determine the opening degree of the first valve according to the ratio of the area of the first temperature zone to the total area of the battery assembly. Specifically, the controller can determine the opening degree of the first valve according to the following formula:

$$K_1 = \frac{S_L}{S_L + S_H}, \quad T_{max} - T_{min} > 10°C$$

wherein $K_1$ is the opening degree of the first valve, $S_L$ is the ratio of the area of the first temperature zone to the total area of the battery assembly, $S_H$ is the ratio of the area of the second temperature zone to the total area of the battery assembly, and $S_L + S_H$ is the total area of the battery assembly.

In addition, after the working medium is transferred to the battery assembly through the heat exchange member corresponding to the first temperature zone and the heat exchange member corresponding to the second temperature zone respectively according to the determined opening degrees of the first valve and the second valve, the controller can again acquire the temperature difference of the battery assembly. For example, the controller returns to S603, and if the temperature difference of the battery assembly is still greater than or equal to 10°C, the controller can quantitatively adjust

the corresponding opening degrees of the plurality of valves according to the above formula again until the temperature difference of the battery assembly is greater than or equal to 5°C and less than 10°C.

S607, quantitatively adjust the corresponding opening degrees of the plurality of valves. For example, when the temperature difference of the battery assembly is greater than or equal to 5°C and less than 10°C, the controller can quantitatively reduce the opening degree of the second valve to reduce the heating power of the second temperature zone, and the opening degree of the second valve ranges from 0 to 50%. The controller can quantitatively increase the opening degree of the first valve to increase the heating power of the first temperature zone, and the opening degree of the first valve ranges from 50 to 100%.

In an embodiment, the controller can determine the opening degree of the first valve and the opening degree of the second valve according to the average temperature of the second temperature zone, the ratio of the area of the second temperature zone to the total area of the battery assembly, the average temperature of the first temperature zone, the ratio of the area of the first temperature zone to the total area of the battery assembly, and the target temperature. Specifically, the controller can determine the opening degree of the first valve according to the following formula:

$$K_1 = \begin{cases} \dfrac{(T_0 - T_L) \cdot S_L}{(T_0 - T_H) \cdot S_H + (T_0 - T_L) \cdot S_L}, & 10°\mathrm{C} \geq T_{max} - T_{min} \geq 5°\mathrm{C}\text{且}T_{max} < T_0 \\ 1, & T_{max} \geq T_0 \end{cases}$$

wherein $K_1$ is the opening degree of the first valve, the average temperature $T_H$ of the second temperature zone can be any value in the range of -15°C to 25°C, the average temperature $T_L$ of the first temperature zone can be any value in the range of -20°C to 15°C, and $T_H$ is greater than $T_L$, and the target temperature $T_0$ is 15°C.

When the maximum temperature $T_{max}$ of the battery assembly is less than the target temperature and 10°C ≥ $T_{max}$ - $T_{min}$ ≥ 5°C , the controller can quantitatively determine the opening degree of the first valve and the opening degree of the second valve according to the above formula.

For example, if the ratio of the area of the first temperature zone to the total area of the battery assembly is any value in the range of 10% to 90%, the opening degree of the first valve acquired according to the above formula corresponds to 0.115 to 1. Correspondingly, the controller can determine the opening degree of the second valve to be 0 to 0.885 according to the opening degree of the first valve.

For another example, if the ratio of the area of the first temperature zone to the total area of the battery assembly and the ratio of the area of the second temperature zone to the total area of the battery assembly are both 50%. Then, the opening degree of the first valve acquired according to the above formula corresponds to 0.538 to 1. Correspondingly, the controller can determine the opening degree of the second valve to be 0 to 0.462 according to the opening degree of the first valve.

When the maximum temperature $T_{max}$ of the battery assembly is greater than or equal to the target temperature, the opening degree of the first valve is 1, and the opening degree of the second valve is 0. At this time, the controller can only increase the temperature of the first temperature zone to the target temperature.

In addition, after the high-temperature working medium is transferred to the battery assembly through the heat exchange member corresponding to the first temperature zone and the heat exchange member corresponding to the second temperature zone according to the determined opening degrees of the first valve and the second valve, the controller can again acquire the temperature difference of the battery assembly. If the temperature difference of the battery assembly is still greater than or equal to 5°C, the controller can perform S603 again until the temperature difference of the battery assembly is less than 5°C.

S608, determine whether the minimum temperature is greater than or equal to 23°C. If the minimum temperature of the battery assembly is greater than or equal to 23°C, proceed to S609. If the minimum temperature of the battery assembly is less than 23°C, return to S603.

S609, exit the heating. When the minimum temperature of the battery assembly is greater than or equal to 23°C, the controller can end the heating of the battery assembly.

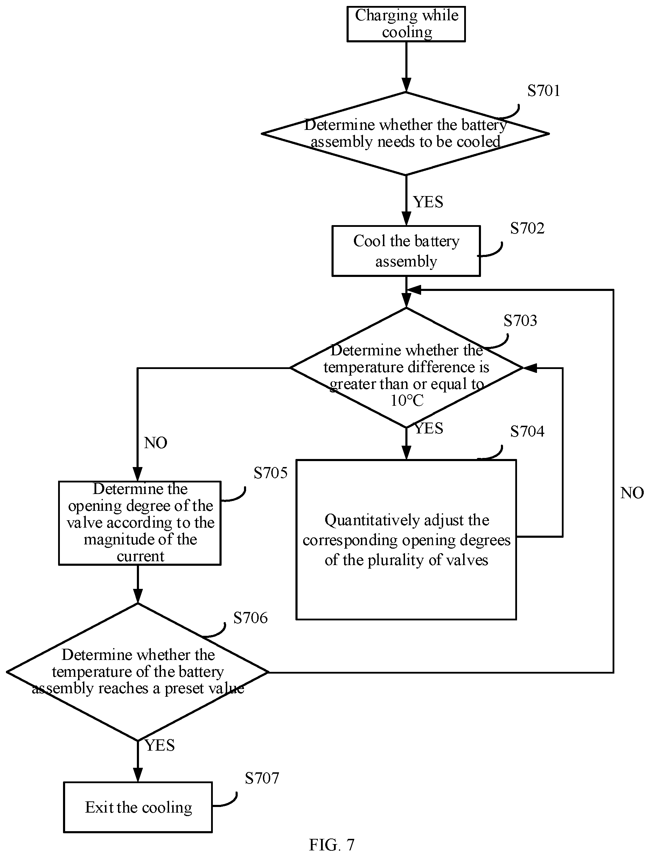

Referring to FIG. 7, FIG. 7 is a flow schematic diagram of charging while cooling according to an embodiment of the present disclosure. As shown in FIG. 7, the opening degree of the first valve is $K_1$, and the opening degree of the second valve is 1-$K_1$.

S701, determine whether the battery assembly needs to be cooled. For example, if the maximum temperature of the battery assembly is greater than or equal to 38°C and the minimum temperature of the battery assembly is greater than or equal to 32°C, or the maximum temperature of the battery assembly is greater than or equal to 42°C, the controller performs S702 to cool the battery assembly.

S702, cool the battery assembly. When the first temperature is in the first preset range and the temperature difference is less than the second threshold, the opening degree control instruction of the first valve and the opening degree control instruction of the second valve are generated. The opening degree control instruction of the first valve and

the opening degree control instruction of the second valve are configured to adjust the opening degree of the first valve to be equal to the opening degree of the second valve. For example, the opening degree of the first valve is 50%, and the opening degree of the second valve is 50%.

S703, determine whether the temperature difference is greater than or equal to 10°C. The second threshold can be 10°C. For example, the controller can determine according to the difference between the maximum temperature and the minimum temperature of the battery assembly, and can also determine according to the difference between any temperature of the first temperature zone and any temperature of the second temperature zone of the battery assembly. If the temperature difference is greater than or equal to 10°C, proceed to S704. If the temperature difference is less than 10°C, proceed to S705.

S704, quantitatively adjust the corresponding opening degrees of the plurality of valves. For example, when the temperature difference is greater than or equal to 10°C, the controller can quantitatively increase the opening degree of the second valve to increase the cooling power of the second temperature zone, and the opening degree of the second valve ranges from 50% to 100%. The controller can quantitatively reduce the opening degree of the first valve to reduce the cooling power of the first temperature zone, and the opening degree of the first valve ranges from 0% to 50%.

In an embodiment, the controller can determine the opening degree of the first valve and the opening degree of the second valve according to the average temperature of the second temperature zone, the ratio of the area of the second temperature zone to the total area of the battery assembly, the average temperature of the first temperature zone, the ratio of the area of the first temperature zone to the total area of the battery assembly, and the target temperature. Specifically, the controller can determine the opening degree of the first valve according to the following formula:

$$K_1 = \begin{cases} \dfrac{(T_0 - T_L) \cdot S_L}{(T_0 - T_H) \cdot S_H + (T_0 - T_L) \cdot S_L}, & T_{min} > T_0 \\ 0 \quad , & T_{min} \ll T_0 \end{cases}$$

wherein $K_1$ is the opening degree of the first valve, the average temperature $T_H$ of the second temperature zone can be any value in the range of 33°C to 60°C, the average temperature $T_L$ of the first temperature zone can be any value in the range of 25°C to 50°C, and $T_H$ is greater than $T_L$, and the target temperature $T_0$ is 33°C.

When the minimum temperature $T_{min}$ of the battery assembly is greater than the target temperature, the controller can quantitatively determine the opening degree of the first valve and the opening degree of the second valve according to the above formula.

For example, if the ratio of the area of the first temperature zone to the total area of the battery assembly is any value in the range of 10% to 90%, the opening degree of the first valve acquired according to the above formula corresponds to 0 to 0.85. Correspondingly, the controller can determine the opening degree of the second valve to be 0.15 to 1 according to the opening degree of the first valve.

For another example, if the ratio of the area of the first temperature zone to the total area of the battery assembly and the ratio of the area of the second temperature zone to the total area of the battery assembly are both 50%, the opening degree of the first valve acquired according to the above formula corresponds to 0 to 0.386. Correspondingly, the controller can determine the opening degree of the second valve to be 0.614 to 1 according to the opening degree of the first valve.

When the temperature difference of the battery assembly is greater than or equal to the preset threshold and the first temperature is less than or equal to the target temperature, the first temperature difference is 0. For example, when the minimum temperature $T_{min}$ of the battery assembly is less than or equal to the target temperature, the opening degree of the first valve is 0 and the opening degree of the second valve is 1. At this time, the controller can only increase the temperature of the second temperature zone to the target temperature.

In addition, after the low-temperature working medium is transferred to the battery assembly through the heat exchange member corresponding to the first temperature zone and the heat exchange member corresponding to the second temperature zone respectively according to the determined opening degrees of the first valve and the second valve, the controller can again acquire the temperature difference of the battery assembly. For example, the controller returns to S703, and if the temperature difference of the battery assembly is still greater than or equal to 10°C, the controller can quantitatively adjust the corresponding opening degrees of the plurality of valves according to the above formula again until the temperature difference of the battery assembly is less than 10°C.

S705, determine the opening degree of the valve according to the magnitude of the current. When the temperature difference of the battery assembly is less than 10°C, the controller can determine the amount of heat generated corresponding to the battery assembly according to the magnitude of the current in the battery assembly, and then match the cooling powers of the second temperature zone and the first temperature zone of the battery assembly according to the amount of heat generated. Finally, the controller determines the opening degree of the second valve and the opening degree of the first valve according to the cooling powers of the second temperature zone and the first temperature zone of the battery assembly.

S706, determine whether the temperature of the battery assembly reaches a preset value. If the maximum temperature of the battery assembly is less than or equal to 40°C and the minimum temperature of the battery assembly is less than or equal to 25°C, or the maximum temperature of the battery assembly is less than or equal to 33°C, proceed to S707. If the temperature of the battery assembly is not within the range, return to S703 to continue cooling the battery assembly.

S707, exit the cooling. When the maximum temperature of the battery assembly is less than or equal to 40°C and the minimum temperature of the battery assembly is less than or equal to 25°C, or the maximum temperature of the battery assembly is less than or equal to 33°C, the temperature of the battery assembly has been reduced to the target temperature, and the controller can end the cooling of the battery assembly.

The method of the embodiments of the present disclosure is described in detail above, and the apparatus of the embodiments of the present disclosure is provided below.

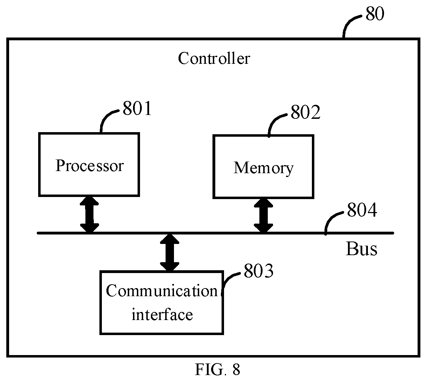

Referring to FIG. 8, FIG. 8 is a structure schematic diagram of a controller according to an embodiment of the present disclosure. As shown in FIG. 8, the controller 80 can include one or more processors 801, one or more memories 802, and one or more communication interfaces 803. These components can be connected by a bus 804 or in other ways, and FIG. 8 is an example in which the components are connected by the bus 804. The controller 80 is the same component as the controller 102 described above. The communication interface 803 can be configured for the controller 80 to communicate with other communication devices, such as other controllers. Specifically, the communication interface 803 can be a wired interface.

The memory 802 can be coupled to the processor 801 via the bus 804 or an input/output port, and the memory 802 can also be integrated with the processor 801. The memory 802 is configured to store various software programs and/or sets of instructions or data. Specifically, the memory 802 can be a read-only memory (ROM) or another type of static storage device that can store static information and instructions, a random access memory (RAM), or another type of dynamic storage device that can store information and instructions, and can also be an electrically erasable programmable read-only memory (EEPROM), a compact disc read-only memory (CD-ROM) or another type of optical disc storage (including compressed disc, laser disc, optical disc, digital versatile disc, Blu-ray disc, etc.), a magnetic disk storage medium or another type of magnetic storage device, or any other medium that can be configured to carry or store desired program code in the form of instructions or data structures and that can be accessed by a computer, but is not limited thereto. The memory 802 can include a high-speed random access memory and can also include a non-volatile memory, such as one or more magnetic disk storage devices, flash memory devices, or other non-volatile solid-state storage devices. The memory 802 can store an operating system (hereinafter referred to as a system for short), such as an embedded operating system uCOS, VxWorks, RTLinux, etc. The memory 802 can also store a network communication program, which can be configured to communicate with one or more additional devices, one or more user devices, and one or more terminals. The memory 802 can exist independently and be connected to the processor 801 via the bus 804. The memory 802 can also be integrated with the processor 801.

The memory 802 is configured to store application program code for implementing the above solutions, and execution is controlled by the processor 801. The processor 801 is configured to execute the application program code stored in the memory 802.

The processor 801 can be a central processing unit, a general purpose processor, a digital signal processor, an application specific integrated circuit, a field programmable gate array, or other programmable logic device, a transistor logic device, a hardware component, or any combination thereof. It can implement or execute various example logical blocks, modules, and circuits described in connection with the present disclosure. The processor 801 may also be a combination that implements determined functions, for example, including one or more microprocessor combinations, a combination of a digital signal processor and a microprocessor, and the like.

In the embodiments of the present disclosure, the processor 801 can be configured to read and execute computer readable instructions. Specifically, the processor 801 can be configured to invoke a program stored in the memory 802, and perform the following operations.

The temperature difference of the battery assembly is acquired, the temperature difference is the difference between the second temperature and the first temperature in the battery assembly, the first temperature is the temperature value of the first temperature zone of the battery assembly, and the second temperature is the temperature value of the second temperature zone of the battery assembly, wherein the first temperature is less than the second temperature.

When the temperature difference of the battery assembly is greater than or equal to the preset threshold, the valve opening degree control instruction is generated according to the area of the first temperature zone and the area of the second temperature zone, the valve opening degree control instruction is configured to adjust opening degrees of the first valve and the second valve, the area of the first temperature zone is the area of the battery assembly surface of the first temperature zone facing the first heat exchange member, and the area of the second temperature zone is the area of the battery assembly surface of the second temperature zone facing the second heat exchange member.

In a possible embodiment, the processor 801 is specifically configured to:

when the temperature difference of the battery assembly is greater than or equal to the preset threshold and the second

temperature is less than the target temperature, generate the valve opening degree control instruction according to the target temperature, the area of the first temperature zone, and the area of the second temperature zone.

In a possible embodiment, the processor 801 is specifically configured to:

When the temperature difference of the battery assembly is greater than or equal to the preset threshold and the first temperature is greater than the target temperature, generate the valve opening degree control instruction according to the target temperature, the area of the first temperature zone, and the area of the second temperature zone.

In a possible embodiment, the processor 801 is specifically configured to:

acquire the target temperature corresponding to the working state of the battery assembly being the heating state and the first threshold;

when the temperature difference of the battery assembly is greater than or equal to the first threshold and the second temperature is less than the target temperature corresponding to the heating state, generate the valve opening degree control instruction according to the area of the first temperature zone and the area of the second temperature zone.

In a possible embodiment, the processor 801 is specifically configured to:

acquire the target temperature corresponding to the working state of the battery assembly being the cooling while charging/discharging state and the second threshold;

when the temperature difference of the battery assembly is greater than or equal to the second threshold and the first temperature is greater than the target temperature corresponding to the cooling while charging/discharging state, generate the valve opening degree control instruction according to the area of the first temperature zone and the area of the second temperature zone.

In a possible embodiment, the processor 801 is specifically configured to:

acquire the target temperature corresponding to the working state of the battery assembly being the heating while charging/discharging state, a third threshold, and a fourth threshold, the third threshold being less than the fourth threshold;

when the temperature difference of the battery assembly is greater than or equal to the third threshold and less than or equal to the fourth threshold, and the second temperature is less than the target temperature corresponding to the heating state, generate the valve opening degree control instruction according to the area of the first temperature zone and the area of the second temperature zone.

In a possible embodiment, the processor 801 is specifically configured to:

determine the opening degree control instruction of the first valve and the opening degree control instruction of the second valve according to the first temperature difference area and the second temperature difference area.

The first temperature difference area is determined according to the first temperature, the target temperature, and the area of the first temperature zone; and the second temperature difference area is determined according to the second temperature, the target temperature, and the area of the second temperature zone.

In a possible embodiment, the processor 801 is specifically configured to:

determine the opening degree control instruction of the first valve according to the ratio of the first temperature difference area to the temperature difference area, wherein the temperature difference area is the sum of the first temperature difference area and the second temperature difference area, the first temperature difference area is the product of the first temperature difference and the area of the first temperature zone, the first temperature difference is the difference between the average temperature of the first temperature zone and the target temperature, the second temperature difference area is the product of the second temperature difference and the area of the second temperature zone, and the second temperature difference is the difference between the average temperature of the second temperature zone and the target temperature;

determine the opening degree control instruction of the second valve according to the opening degree of the first valve.

In a possible embodiment, the sum of the opening degree of the first valve and the opening degree of the second valve is 1.

In a possible embodiment, the processor 801 is specifically configured to:

acquire the target temperature corresponding to the working state of the battery assembly being the heating while charging/discharging state, a third threshold, and a fourth threshold, the third threshold being less than the fourth threshold;

when the temperature difference of the battery assembly is greater than or equal to the fourth threshold, generate the valve opening degree control instruction according to the area of the first temperature zone and the area of the second temperature zone.

In a possible embodiment, the processor 801 is specifically configured to:

generate the opening degree control instruction of the first valve according to the ratio of the area of the first temperature zone to the sum of the area of the first temperature zone and the area of the second temperature zone; determine the opening degree control instruction of the second valve according to the opening degree control instruction of the first valve.

In a possible embodiment, the sum of the opening degree of the first valve and the opening degree of the second valve is 1.

In a possible embodiment, the first temperature is the minimum temperature in the first temperature zone, and/or the second temperature is the maximum temperature in the second temperature zone.

It should be noted that in the embodiments of the present disclosure, the specific implementation and technical effects of each unit can also refer to the corresponding description of the method embodiments shown in FIG. 3.

The present disclosure also provides a computer-readable storage medium, the computer-readable storage medium stores instructions, and when executed on at least one processor, the instructions implement the method for adjusting the opening degree of the valve, such as the method of FIG. 3.

The present disclosure also provides a computer program product, the computer program product includes computer instructions, and when executed by a computing device, the computer instructions implement the method for adjusting the opening degree of the valve, such as the method of FIG. 3.

The present disclosure also provides a computer program product, the computer program product includes computer instructions, and the computer instructions are configured to implement the method for adjusting the opening degree of the valve, such as the method of FIG. 3.

The present disclosure also provides a battery system, and the battery system includes the foregoing controller.

The present disclosure also provides an electric system, the electric system includes the foregoing battery system and a heating management system, and the electric system is configured to implement the method for adjusting the opening degree of the valve, such as the method of FIG. 3.

In the embodiments of the present disclosure, the terms such as "for example," or "such as" are configured to specify examples, examples, or illustrations. Any embodiment or design solution described as "for example" or "such as" in the present disclosure should not be interpreted as being more preferred or more advantageous than other embodiments or design solutions. Rather, the terms such as "for example" or "such as" are intended to present the relevant concept in a specific manner.

In the embodiments of the present disclosure, "at least one" means one or more, and "a plurality of" means two or more. "At least one of the following" or the like refers to any combination of the items, including any combination of a single item or a plurality of items. For example, at least one of a, b, or c can mean a, b, c, (a and b), (a and c), (b and c), or (a and b and c), wherein a, b, and c can be a single item or a plurality of items. "And/or" describes an association relationship between associated objects, and means that three relationships can exist, for example, A and/or B can mean that A exists alone, A and B exist simultaneously, and B exists alone, where A and B can be singular or plural. The character "/" generally means that the associated objects before and after the character "/" are in an "or" relationship.

In addition, unless otherwise specified, the ordinal numbers such as "first" and "second" used in the embodiments of the present disclosure are configured to distinguish different objects, and are not configured to limit the order, the sequence, the priority, or the importance of the objects. For example, a first device and a second device are only used for the convenience of description, and do not mean that the structures, the importance, or the like of the first device and the second device are different. In some embodiments, the first device and the second device can also be the same device.

As used in the above embodiments, the term "when" can be interpreted as meaning "if" or "after" or "in response to determining" or "in response to detecting", depending on the context. The above merely is an optional embodiment of the present disclosure, and is not intended to limit the present disclosure. Any modification, equivalent replacement, improvement, or the like made within the concept and principle of the present disclosure shall be included in the protection scope of the present disclosure.

A person skilled in the art can understand that all or part of the steps of the above embodiments can be completed by hardware, or by a program instructing related hardware. The program can be stored in a computer readable storage medium, which can be a read-only memory, a magnetic disk, an optical disk, or the like.

The above merely is specific embodiments of the present disclosure, but the protection scope of the present disclosure is not limited thereto. Any person skilled in the art can easily think of various equivalent modifications or replacements within the technical scope disclosed by the present disclosure, and these modifications or replacements

shall be included in the protection scope of the present disclosure. Therefore, the protection scope of the present disclosure shall be subject to the protection scope of the claims.

## Claims

1. A method for adjusting an opening degree of a valve, configured to control the opening degrees of a first valve (1011) and a second valve (1012) of a battery assembly (101), the battery assembly (101) having a first temperature zone and a second temperature zone, a first heat exchange member (1013) being arranged in the first temperature zone, a second heat exchange member (1014) being arranged in the second temperature zone, the first valve (1011) being connected to the first heat exchange member (1013) to control a flow rate of a working medium flowing into the first heat exchange member (1013), and the second valve (1012) being connected to the second heat exchange member (1014) to control a flow rate of a working medium flowing into the second heat exchange member (1014), the method comprising:

    acquiring a temperature difference of the battery assembly (101), the temperature difference being a difference between a second temperature and a first temperature in the battery assembly (101), the first temperature being a temperature value of the first temperature zone of the battery assembly (101), and the second temperature being a temperature value of the second temperature zone of the battery assembly (101), and the first temperature being less than the second temperature; and
    when the temperature difference of the battery assembly (101) is greater than or equal to a preset threshold, generating a valve opening degree control instruction according to an area of the first temperature zone and an area of the second temperature zone, the valve opening degree control instruction being configured to adjust the opening degrees of the first valve (1011) and the second valve (1012), the area of the first temperature zone being an area of a battery assembly surface of the first temperature zone facing the first heat exchange member (1013), and the area of the second temperature zone being an area of a battery assembly surface of the second temperature zone facing the second heat exchange member (1014).

2. The method according to claim 1, further comprising:
acquiring a working state of the battery assembly (101), a target temperature corresponding to the working state, and a preset threshold corresponding to the working state.

3. The method according to claim 2, wherein generating the valve opening degree control instruction according to the area of the first temperature zone and the area of the second temperature zone comprises:
when the temperature difference of the battery assembly (101) is greater than or equal to the preset threshold and the second temperature is less than the target temperature, generating the valve opening degree control instruction according to the target temperature, the area of the first temperature zone, and the area of the second temperature zone.

4. The method according to claim 2, wherein generating the valve opening degree control instruction according to the area of the first temperature zone and the area of the second temperature zone comprises:
when the temperature difference of the battery assembly (101) is greater than or equal to the preset threshold and the first temperature is greater than the target temperature, generating the valve opening degree control instruction according to the target temperature, the area of the first temperature zone, and the area of the second temperature zone.

5. The method according to claim 3, wherein generating the valve opening degree control instruction according to the target temperature, the area of the first temperature zone, and the area of the second temperature zone comprises:

    acquiring the target temperature corresponding to the working state of the battery assembly (101) being a heating state and a first threshold; and
    when the temperature difference of the battery assembly (101) is greater than or equal to the first threshold and the second temperature is less than the target temperature corresponding to the heating state, generating the valve opening degree control instruction according to the target temperature, the area of the first temperature zone, and the area of the second temperature zone.

6. The method according to claim 4, wherein generating the valve opening degree control instruction according to the target temperature, the area of the first temperature zone, and the area of the second temperature zone comprises:

acquiring the target temperature corresponding to the working state of the battery assembly (101) being a cooling while charging/discharging state and a second threshold; and
when the temperature difference of the battery assembly (101) is greater than or equal to the second threshold and the first temperature is greater than the target temperature corresponding to the cooling while charging/-discharging state, generating the valve opening degree control instruction according to the target temperature, the area of the first temperature zone, and the area of the second temperature zone.

**7.** The method according to claim 3, wherein generating the valve opening degree control instruction according to the target temperature, the area of the first temperature zone, and the area of the second temperature zone comprises:

acquiring the target temperature corresponding to the working state of the battery assembly (101) being a heating while charging/discharging state, a third threshold, and a fourth threshold, the third threshold being less than the fourth threshold; and
when the temperature difference of the battery assembly (101) is greater than or equal to the third threshold, less than or equal to the fourth threshold, and the second temperature is less than the target temperature corresponding to the heating state, generating the valve opening degree control instruction according to the target temperature, the area of the first temperature zone, and the area of the second temperature zone.

**8.** The method according to any one of claims 3 to 6, wherein generating the valve opening degree control instruction according to the target temperature, the area of the first temperature zone, and the area of the second temperature zone comprises:

determining the opening degree control instruction of the first valve (1011) and the opening degree control instruction of the second valve (1012) according to a first temperature difference area and a second temperature difference area; and
wherein the first temperature difference area is determined according to the first temperature, the target temperature, and the area of the first temperature zone; and the second temperature difference area is determined according to the second temperature, the target temperature, and the area of the second temperature zone.

**9.** The method according to claim 8, wherein determining the opening degree control instruction of the first valve and the opening degree control instruction of the second valve according to the first temperature difference area and the second temperature difference area comprises:

determining the opening degree control instruction of the first valve (1011) according to a ratio of the first temperature difference area to a temperature difference area, the temperature difference area being a sum of the first temperature difference area and the second temperature difference area, the first temperature difference area being a product of a first temperature difference and the area of the first temperature zone, the first temperature difference being a difference between an average temperature of the first temperature zone and the target temperature, the second temperature difference area being a product of a second temperature difference and the area of the second temperature zone, and the second temperature difference being a difference between an average temperature of the second temperature zone and the target temperature; and
determining the opening degree control instruction of the second valve (1012) according to the opening degree of the first valve (1011).

**10.** The method according to claim 9, wherein a sum of the opening degree of the first valve (1011) and the opening degree of the second valve (1012) is 1.

**11.** The method according to claim 3, wherein generating the valve opening degree control instruction according to the area of the first temperature zone and the area of the second temperature zone comprises:

acquiring the target temperature corresponding to the working state of the battery assembly (101) being a heating while charging/discharging state, a third threshold, and a fourth threshold, the third threshold being less than the fourth threshold; and
when the temperature difference of the battery assembly (101) is greater than or equal to the fourth threshold, generating the valve opening degree control instruction according to the area of the first temperature zone and the area of the second temperature zone.

**12.** The method according to claim 11, wherein generating the valve opening degree control instruction according to the area of the first temperature zone and the area of the second temperature zone comprises:

generating the opening degree control instruction of the first valve according to a ratio of the area of the first temperature zone to a sum of the area of the first temperature zone and the area of the second temperature zone; and
determining the opening degree control instruction of the second valve according to the opening degree control instruction of the first valve.

**13.** The method according to claim 12, wherein a sum of the opening degree of the first valve (1011) and the opening degree of the second valve (1012) is 1.

**14.** The method according to claim 1, wherein the first temperature is a minimum temperature in the first temperature zone, and/or the second temperature is a maximum temperature in the second temperature zone.

**15.** The method according to claim 9, further comprising:
when the temperature difference of the battery assembly (101) is greater than or equal to the preset threshold and the second temperature is greater than or equal to the target temperature, the second temperature difference being 0.

**16.** The method according to claim 9, further comprising:
when the temperature difference of the battery assembly (101) is greater than or equal to the preset threshold and the first temperature is less than or equal to the target temperature, the first temperature difference being 0.

**17.** A controller (80), comprising a processor (801) and a memory (802), the processor (801) being coupled to the memory (802), the memory (802) being configured to store a computer program, and the processor (801) being configured to invoke and execute the computer program to enable the controller (80) to implement the method according to any one of claims 1 to 16.

**18.** A computer readable storage medium, storing a computer program, the computer program comprising instructions configured to implement the method according to any one of claims 1 to 16.

**19.** A heating management system (10), comprising a battery assembly (101), the battery assembly (101) comprising a first valve (1011), a second valve (1012), a first heat exchange member (1013) and a second heat exchange member (1014), and the heating management system (10) being configured to implement the method according to any one of claims 1 to 16.

**20.** An electric system, comprising the heating management system (10) according to claim 19, and the electric system being configured to implement the method according to any one of claims 1 to 16.

Heating management system
10
Battery assembly
1013
1014
First heat exchange member
Second heat exchange member
101
1011
1012
Controller
102

FIG. 1

Acquire the working state of the battery assembly through the BMS
Send the working state of the battery assembly and a target temperature corresponding to the working state to the power battery thermal management system
VCU start the vehicle thermal management system to coordinate the power battery thermal management system to adjust the temperature of the battery assembly
The power battery thermal management system determines the corresponding opening degrees of the plurality of valves according to the working state of the battery assembly and the target temperature
NO
Determine whether the temperature of the battery assembly reaches the target temperature
YES
Close the vehicle thermal management system
Close the power battery thermal management system

FIG. 2

The temperature difference of the battery assembly is acquired
S301
When the temperature difference of the battery assembly is greater than or equal to the preset threshold, the valve opening degree control instruction is generated according to the area of the first temperature zone and the area of the second temperature zone
S302

FIG. 3

Battery
NCT
Battery
NCT
Battery
NCT
Battery
NCT

FIG. 4

Heating
Determine whether the minimum temperature is greater than or equal to -30°C and less than or equal to -20°C
S501
YES
Heat the battery assembly
S502
Determine whether the temperature difference is greater than or equal to 5°C
S503
NO
YES
S504
Quantitatively adjust the corresponding opening degrees of the plurality of valves
NO
Maintain the original heating strategy
S505
S506
Determine whether the minimum temperature is greater than or equal to -20°C
YES
Exit pure heating
S507

FIG. 5

Charging while heating
S601
Determine whether the minimum temperature is greater than or equal to -20°C and less than or equal to 15°C
YES
S602
Heat the battery assembly
S603
Determine whether the temperature difference is greater than or equal to 5°C
NO
YES
S604
Determine whether the temperature difference is greater than or equal to 10°C
NO
YES
S605
Maintain the original heating strategy
S606
Cool the second temperature zone and heat the first temperature zone
S607
Quantitatively adjust the corresponding opening degrees of the plurality of valves
NO
NO
S608
Determine whether the minimum temperature is greater than or equal to 23°C
YES
S609
Exit the heating

FIG. 6

Charging while cooling
S701
Determine whether the battery assembly needs to be cooled
YES
S702
Cool the battery assembly
S703
Determine whether the temperature difference is greater than or equal to 10°C
YES
S704
NO
S705
Determine the opening degree of the valve according to the magnitude of the current
Quantitatively adjust the corresponding opening degrees of the plurality of valves
NO
S706
Determine whether the temperature of the battery assembly reaches a preset value
YES
S707
Exit the cooling

FIG. 7

80
Controller
801
Processor
802
Memory
804
Bus
803
Communication
interface

FIG. 8

**INTERNATIONAL SEARCH REPORT**

International application No. **PCT/CN2024/119737**

**A. CLASSIFICATION OF SUBJECT MATTER**

H01M10/635(2014.01)i; B60L58/24(2019.01)i; F24F13/30(2006.01)i

According to International Patent Classification (IPC) or to both national classification and IPC

**B. FIELDS SEARCHED**

Minimum documentation searched (classification system followed by classification symbols)

IPC:H01M,B60L,F24F

Documentation searched other than minimum documentation to the extent that such documents are included in the fields searched

Electronic data base consulted during the international search (name of data base and, where practicable, search terms used)

ENTXT, WPABSC, USTXT, CNTXT, VEN, DWPI, CNKI: 调节, 阀, 换热, 开度, 流量, 温度, 温度差, 温差, 面积, 工作状态, 阈值, regulating, valve, opening, flow, temperature, difference, area, working state, threshold

**C. DOCUMENTS CONSIDERED TO BE RELEVANT**

| Category* | Citation of document, with indication, where appropriate, of the relevant passages | Relevant to claim No. |
|---|---|---|
| A | CN 114497804 A (SANY ELECTRIC VEHICLE TECHNOLOGY CO., LTD.) 13 May 2022 (2022-05-13) description, paragraphs 0006-0033 and 0040-0094, and figures 1-3 | 1-20 |
| A | CN 110513858 A (QINGDAO HISENSE HITACHI AIR-CONDITIONING SYSTEMS CO., LTD.) 29 November 2019 (2019-11-29) entire document | 1-20 |
| A | CN 113471575 A (SANY SPECIAL PURPOSE VEHICLE CO., LTD.) 01 October 2021 (2021-10-01) entire document | 1-20 |
| A | CN 113701548 A (SHENZHEN QIANHAI ENERGY TECHNOLOGY DEVELOPMENT CO., LTD.) 26 November 2021 (2021-11-26) entire document | 1-20 |
| A | CN 115230536 A (GREAT WALL MOTOR CO., LTD.) 25 October 2022 (2022-10-25) entire document | 1-20 |
| A | KR 20090081332 A (KIM CHANG HO) 28 July 2009 (2009-07-28) entire document | 1-20 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **27 November 2024** | **30 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2024/119737**

**C. DOCUMENTS CONSIDERED TO BE RELEVANT**

| Category* | Citation of document, with indication, where appropriate, of the relevant passages | Relevant to claim No. |
|---|---|---|
| A | US 2022041031 A1 (BYD CO., LTD.) 10 February 2022 (2022-02-10) entire document | 1-20 |
| A | WO 2023039853 A1 (SAIC MOTOR CORP., LTD.) 23 March 2023 (2023-03-23) entire document | 1-20 |

Form PCT/ISA/210 (second sheet) (July 2022)

**INTERNATIONAL SEARCH REPORT**
**Information on patent family members**

International application No.
**PCT/CN2024/119737**

| Patent document cited in search report | Publication date (day/month/year) | Patent family member(s) | Publication date (day/month/year) |
|---|---|---|---|
| CN 114497804 A | 13 May 2022 | None | |
| CN 110513858 A | 29 November 2019 | None | |
| CN 113471575 A | 01 October 2021 | None | |
| CN 113701548 A | 26 November 2021 | None | |
| CN 115230536 A | 25 October 2022 | None | |
| KR 20090081332 A | 28 July 2009 | KR 101043158 B1 | 20 June 2011 |
| US 2022041031 A1 | 10 February 2022 | AU 2019409171 A1 | 12 August 2021 |
| | | AU 2019409171 B2 | 19 January 2023 |
| | | EP 3900963 A1 | 27 October 2021 |
| | | EP 3900963 A4 | 08 June 2022 |
| | | JP 2022514707 A | 14 February 2022 |
| | | JP 7231310 B2 | 01 March 2023 |
| | | US 11807068 B2 | 07 November 2023 |
| | | WO 2020125684 A1 | 25 June 2020 |
| | | CN 111354998 A | 25 June 2020 |
| | | HK 40021573 A0 | 06 November 2020 |
| | | HK 40021573 A1 | 15 July 2022 |
| WO 2023039853 A1 | 23 March 2023 | EP 4403388 A1 | 24 July 2024 |
| | | CN 113993731 A | 28 January 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202311614858